Europäisches Patentamt

European Patent Office

Office européen des brevets

(19)

(11) Veröffentlichungsnummer: **0 320 739 B1**

(12) **EUROPÄISCHE PATENTSCHRIFT**

(45) Veröffentlichungstag der Patentschrift: **18.03.92**

(51) Int. Cl.⁵: **B60R 22/20**

(21) Anmeldenummer: **88120271.7**

(22) Anmeldetag: **05.12.88**

(54) **Vorrichtung zum Verstellen eines Gurtumlenkbeschlages für einen Sicherheitsgurt.**

(30) Priorität: **14.12.87 DE 3742390**

(43) Veröffentlichungstag der Anmeldung:
**21.06.89 Patentblatt 89/25**

(45) Bekanntmachung des Hinweises auf die
Patenterteilung:
**18.03.92 Patentblatt 92/12**

(84) Benannte Vertragsstaaten:
**DE ES FR GB IT**

(56) Entgegenhaltungen:
**DE-A- 3 406 047**
**FR-A- 2 369 950**
**US-A- 3 777 840**
**US-A- 4 222 588**

(73) Patentinhaber: **AUTOLIV GmbH**
**Otto-Hahn-Strasse 4**
**W-2200 Elmshorn(DE)**

(72) Erfinder: **Grunewald, Hans-Joachim**
**Moordamm 5**
**W-2207 Kiebitzreihe(DE)**
Erfinder: **Mennerich, Klaus-Peter**
**Otzenstrasse 23**
**W-2000 Hamburg 50(DE)**

(74) Vertreter: **Reinhard, Skuhra, Weise**
**Postfach 44 01 51 Friedrichstrasse 31**
**W-8000 München 40(DE)**

## Beschreibung

Die Erfindung betrifft eine Vorrichtung zum Verstellen eines Gurtumlenkbeschlages für einen Sicherheitsgurt gemäß dem Oberbegriff des Patentanspruchs 1.

Der Zweck einer derartigen Verstellvorrichtung besteht darin, die Gurtanlageverhältnisse im Hinblick auf eine Verbesserung der Sicherheitsgurtwirkung an die Körpergröße des Gurtträgers anzupassen.

Aus der DE-34 06 047 ist bereits eine derartige Verstellvorrichtung bekannt, bei der der obere Gurtumlenkbeschlag von Hand nach Lösen einer Rasttaste verschiebbar und durch Loslassen der Taste in einer neuen Schubstellung einrastbar ist. Die Bedienung dieser Vorrichtung ist recht unbequem und mühsam und der Aufbau dieser vorbekannten Vorrichtung ist außerordentlich komponentenreich und komplex. Nachteilig ist weiterhin das Gewicht der erforderlichen Komponenten sowie deren Herstellungsaufwand.

Der Erfindung liegt die Aufgabe zugrunde, eine Vorrichtung zum Verstellen eines Gurtumlenkbeschlages mit einem einfachen Aufbau zu schaffen, die leichtgewichtig herstellbar ist und zuverlässig arbeitet.

Erfindungsgemäß wird diese Aufgabe durch die im Patentanspruch 1 gekennzeichneten Merkmale gelöst.

Bevorzugte Merkmale, die die Erfindung vorteilhaft weiterbilden, sind den Unteransprüchen zu entnehmen.

Die Erfindung schafft vorteilhaft eine einfach aufgebaute, leichtgewichtig realisierbare und sicher und zuverläsig arbeitende Vorrichtung zum Verstellen eines Gurtumlenkbeschlages, bei der ein Halteprofil vorgesehen ist, an dem der Gurtumlenkbeschlag mittels eines Führungselements verschiebbar geführt und in verschiedenen Schubstellungen mittels eines Zahnrades blockierbar ist, welches stets mit einem unbeweglichen komplementären Eingriffsprofil im Bereich des Halteprofils kämmt und durch den Eingriff eines Rastelements blockierbar ist, wobei das Rastelement entgegen seiner Eingriffsrichtrnng in einer Nichteingriffsstellung mittels eines Steuerteils über eine Feder vorgespannt gehalten und bei Gurtbeanspruchung in eine Eingriffsstellung mit dem Zahnrad bringbar ist.

Hierdurch kann der Gurtumlenkbeschlag auf Wunsch problemlos entweder manuell oder gemäß einer bevorzugten weiteren Ausgestaltung der Erfindung fernbetätigt verstellt werden, beispielsweise mittels einer an eine Sitzlängsverstellung gekoppelten Seilzuganordnung.

Das Rastelement greift vorzugsweise in der Richtung an das Zahnrad an, in der sich der Gurtumlenkbeschlag bei Gurtbeanspruchung zu bewegen trachtet. Vorteilhaft führt hierdurch eine Zugbeanspruchung des Gurtes zu einer unmittelbaren Betätigung des Rastelementes, um das Zahnrad sicher in der eingestellten Schubstellung des Gurtumlenkbeschlages zu halten. Wenn andererseits der Sicherheitsgurt nicht mit Zug beaufschlagt ist, kann der Gurtumlenkbeschlag problemlos an dem Halteprofil individuell eingestellt werden.

Gemäß einer weiteren Ausgestaltung der Erfindung weist das Halteprofil zwei einander gegenüberliegende Führungsabschnitte auf, wobei das Eingriffsprofil für das Zahnrad in dem Halteprofil gebildet ist. Das Halteprofil ist vorzugsweise im wesentlichen U-förmig ausgebildet, wobei die Profilschenkel die Führungsabschnitte zumindest für das Steuerteil sind und das Eingriffsprofil mittels Durchbrechungen im Steg gestaltet ist. Alternativ ist in günstiger Weise vorgesehen, daß das Eingriffsprofil in einem Führungsabschnitt gebildet ist. Für die Anordnung des Zahnrades ergeben sich bei den letztgenannten Alternativen entweder eine Drehachse parallel zum Steg oder parallel zu den Profilschenkeln.

Das Rastelement ist vorzugsweise an einem plattenförmigen Führungselement angeformt, das im Halteprofil parallel zum Steuerteil geführt ist. Hierdurch ergibt sich eine besonders kompakte Ausgestaltung der Vorrichtung.

Das Steuerteil ist vorzugsweise in einer Verschieberichtung, beispielsweise bei einem oberen Gurtumlenkbeschlag nach oben, mit einer Feder vorgespannt. Zum fernbetätigbaren Verschieben des Steuerteils greift an diesen eine Seilzuganordnung an, welche mechanisch an die Sitzlängsverstellung gekoppelt ist. Als Alternative zum Verschieben des Steuerteils ist ein an dem Zahnrad angreifendes Band mit komplementären Eingriffslöchern vorgesehen, das ebenfalls mit der Sitzlängsverstellung mechanisch gekoppelt ist.

Nach einer weiteren Ausgestaltung der Erfindung weist das Zahnrad ein zusätzliches Rastelement als Sicherheitsorgan auf, um das Zahnrad bei Gurtbeanspruchung sowie bei einem Defekt der Fernbetätigung, beispielsweise des Seiles, gegen ein Drehen zusätzlich zu sichern. Das Rastelement greift an dem Zahnrad vorzugsweise in einem Bereich an, der dem Eingriffsbereich des Zahnrades im Eingriffsprofil diametral gegenüberliegt. Hierdurch werden die Vorzüge einer kompakten Ausgestaltung mit denen einer idealen Kraftverteilung in der Vorrichtung verbunden.

Das Rastelement ist vorzugsweise in Eingriffsrichtung vorgespannt und über das Steuerteil zum Verschieben des Gurtumlenkbeschlages aus dem Eingriff mit dem Zahnrad schwenkbar.

Gemäß einer alternativen Ausgestaltung der Erfindung ist das Rastelement in Eingriffsrichtung vorgespannt und mit einem Handhebel aus dem Eingriff mit dem Zahnrad schwenkbar. Dieser Handhebel kann auch anstelle einer Fernbetätigung der Verstelleinrichtung vorgesehen sein.

Weitere Einzelheiten und Vorteile der Erfindung sind dem anschließenden Beschreibungsteil zu entnehmen, in dem die Erfindung anhand von Ausführungsbeispielen unter Bezugnahme auf die beigefügten Zeichnungen näher erläutert wird. Es zeigen:

Figur 1    einen Längsschnitt durch ein erstes Ausführungsbeispiel einer Vorrichtung zum Verstellen eines Gurtumlenkbeschlages;

Figur 2    einen Schnitt entlang der Schnittlinie II-II in Fig. 1;

Figur 3    einen Schnitt entlang der Schnittlinie III-III in Fig. 2;

Figur 4    einen Längsschnitt durch ein gegenüber der Fig. 1 modifiziertes Ausführungsbeispiel mit einem Sperrelement;

Figur 5    einen Schnitt entlang der Schnittlinie V-V in Fig. 4;

Figur 6    einen Längsschnitt durch ein weiteres Ausführungsbeispiel ; und

Figur 7    einen Schnitt entlang der Schnittlinie VII-VII in Fig. 6.

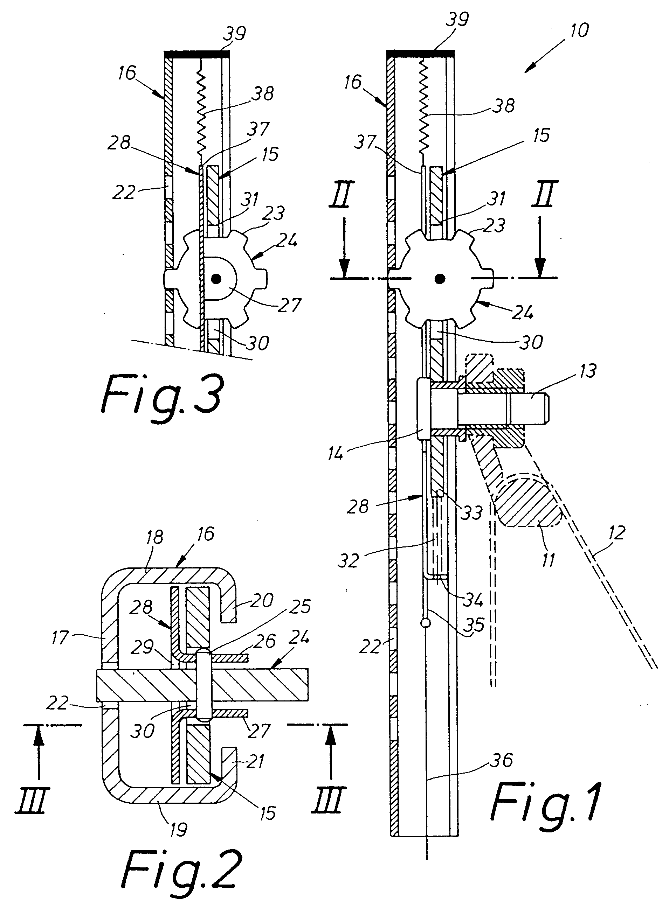

In Figur 1 ist ein Längsschnitt durch eine Vorrichtung 10 zum Verstellen eines Gurtumlenkbeschlages 11 für einen gestrichelt angedeuteten Sicherheitsgurt 12 dargestellt. Der Gurtumlenkbeschlag 11 ist in üblicher Weise schwenkbar auf einem Bolzen I3 befestigt. Der Bolzen 13 ist mit seinem Kopf 14 an einem plattenförmigen Führungselement 15 angebracht, das in einem Halteprofil 16 gleitend verschiebbar angeordnet ist.

Das Halteprofil 16 weist einen im wesentlichen U-förmigen Querschnitt mit einem Steg 17 und Profilschenkel 18 und 19 auf. Die vom Steg 17 abweisenden Enden 20 bzw. 21 der Profilschenkel 18 und 19 sind in einer Ebene parallel zu dem Steg 17 zueinander gerichtet umgebogen, vergl. Fig. 2. In dem Steg 17 sind mittig Löcher 22 gebildet, die sich in Längsrichtung des Halteprofils 16 entlang der Profilmittellinie des Steges 17 erstrecken.

Die Löcher 22 im Steg 17 bilden ein unbewegliches komplementäres Eingriffsprofil für Zähne 23 eines Zahnrades 24, d.h., die Form und der gegenseitige Abstand der Löcher ist auf die Form der Zähne 23 und deren gegenseitigem radialen Abstand abgestimmt.

Das Zahnrad 24 ist mittels eines Bolzens 25 an abgewinkelten Laschen 26, 27 eines Steuerteiles 28 drehbar gelagert. Das Steuerteil 28 besitzt eine Ausnehmung 29, durch die das Zahnrad 24 hindurchtritt und mit wenigstens einer der Löcher 22 im Eingriff ist.

Das Zahnrad 24 durchtritt auch das plattenförmige Führungselement 15 in einer Ausnehmung 30, wobei die Ausnehmung 30 so gestaltet ist, daß sich das Zahnrad 24 in der unbelasteten Stellung gem. Fig. 1 darin ungehindert drehen kann. An dem plattenförmigen Führungselement 15 ist ein nasenförmiges Rastelement 31 angeformt, das für den Eingriff zwischen zwei Zähnen 23 des Zahnrades 24 bestimmt ist und in den Figuren 1 und 3 außer Eingriff dargestellt ist. Das Rastelement 31 greift in der Richtung an das Zahnrad 24 an, in der sich der Gurtumlenkbeschlag 11 bei Gurtzugbeanspruchungen zu bewegen trachtet. Das Rastelement 31 wird in seiner Nichteingriffstellung durch eine Druckfeder 32 gehalten, die an dem unteren Ende 33 des plattenförmigen Führungselements 15 angreift und sich gegen einen abgewinkelten Abschnitt 34 des Steuerteils 28 abstützt.

Am unteren Ende 35 des Steuerteils 28 ist ein Drahtseil 36 angelenkt, das in nicht dargestellter Weise mechanisch mit einer ebenfalls nicht dargestellten Sitzlängsverstellung verbunden ist. An dem oberen Ende 37 des Steuerteils 28 ist eine Zugfeder 38 angelenkt, die ihrerseits an dem oberen Ende 39 des Halteprofils 16 befestigt ist. Das Steuerteil 28 kann somit von dem Seil 36 unter Mitwirkung der Zugfeder 38 in Längsrichtung zum Verstellen verschoben werden. Alternativ kann statt der Feder 38 auch an dem oberen Ende 37 des Steuerteils 28 ein Drahtseil angelenkt sein, das über eine nicht dargestellte Umlenkrolle ebenfalls zu der Sitzlängsverstellung geführt und mit dieser verbunden ist. Die Umlenkrolle ist im Bereich des oberen Endes 39 des Halteprofils 16 drehbar gelagert.

Die Verstellung des Gurtumlenkbeschlages 11 an dem Halteprofil I6 erfolgt durch das Drahtseil 36, wobei stets dar Zahnrad 24 mit den Löchern 22 im Halteprofil 16 kämmt. Falls der Gurt 12 einer Zugbeanspruchung unterworfen wird, bewegt sich der Gurtumlenkbeschlag 11 entgegen der Wirkung der Druckfeder 32 auf den abgewinkelten Abschnitt 34 des Steuerteils 28 zu, wobei das Rastelement 31 in eine Lücke zwischen zwei Zähnen 23 tritt. Hierdurch wird das Zahnrad 24 wirksam verriegelt, wobei über das plattenförmige Führungselement 15 eine gute Krafteinleitung in das Halteprofil 16 erfolgt und das Rastelement 31 den Eingriff des Zahnrades 24 in die Löcher 22 gewährleistet.

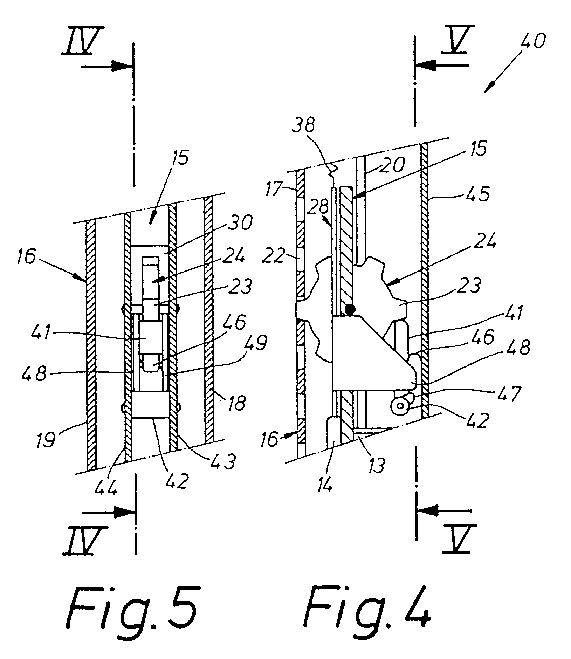

In Fig. 4 ist ein modifiziertes Ausführungsbeispiel einer Verstellvorrichtung 40 mit einem Längsschnittsegment dargestellt, wobei gleiche Teile wie bei dem ersten Ausführungsbeispiel dieselbe Bezugszahl aufweisen. Abweichend von der Vorrichtung 10 weist die Vorrichtung 40 ein zusätzliches Rastelement 41 auf, das an dem Zahnrad 24 in einem Bereich an einem Zahn 23 angreift, der dem Eingriffsbereich des Zahnrads 24 in dem durch die Löcher 22 gebildeten Eingriffsprofil an dem Halteprofil 16 diametral gegenüberliegt.

Das Rastelement 41 ist als Schwenkhebel ausgebildet, der an dem unteren Ende bei 42 schwenkbar an abgewinkelten Abschnitten 43 und 44 des plattenförmigen Führungselements 15 befestigt ist, vergl. Fig. 5. Mit dem plattenförmigen Führungselement 15 ist ferner eine Abdeckung 45 verbunden, an der sich eine Blattfeder 46 abstützt, die das Rastelement 41 in Eingriff mit dem Zahnrad 24 zu drücken trachtet. Im Bereich der Anlenkung 42 des Rastelements 41 ist an dem Rastelement 41 ein Hocken 47 angeformt, der sich über mehr als die Breite des Zahnrades 24 erstreckt. Der Nocken 47 wird von zwei seitlich neben dem Zahnrad angeordneten plattenförmigen Steuerprofilen 48 und 49 beaufschlagt, die abgewinkelt an dem Steuerteil 28 befestigt sind. Über die plattenförmigen Steuerprofile 48 und 49 und den Nocken 47 wird das Rastelement 41 gegen die Wirkung der Feder 46 beim Einstellen des Gurtumlenkbeschlages außer Eingriff mit dem Zahnrad 24 aufgrund der Wirkung der Druckfeder 32 gehalten. Erst wenn sich das plattenförmige Führungselement 15 aufgrund einer Gurtzugbeaufschlagung relativ zu dem Steuerteil 28 bewegt, wird das Rastelement 41 für seine Eingriffsbewegung freigegeben. Das Rastelement 41 kann weiterhin einen Handhebel aufweisen, der nach Art eines Winkelhebels an dem Rastelement 41 angeformt ist und eine Verstellung der Vorrichtung von Hand ermöglicht.

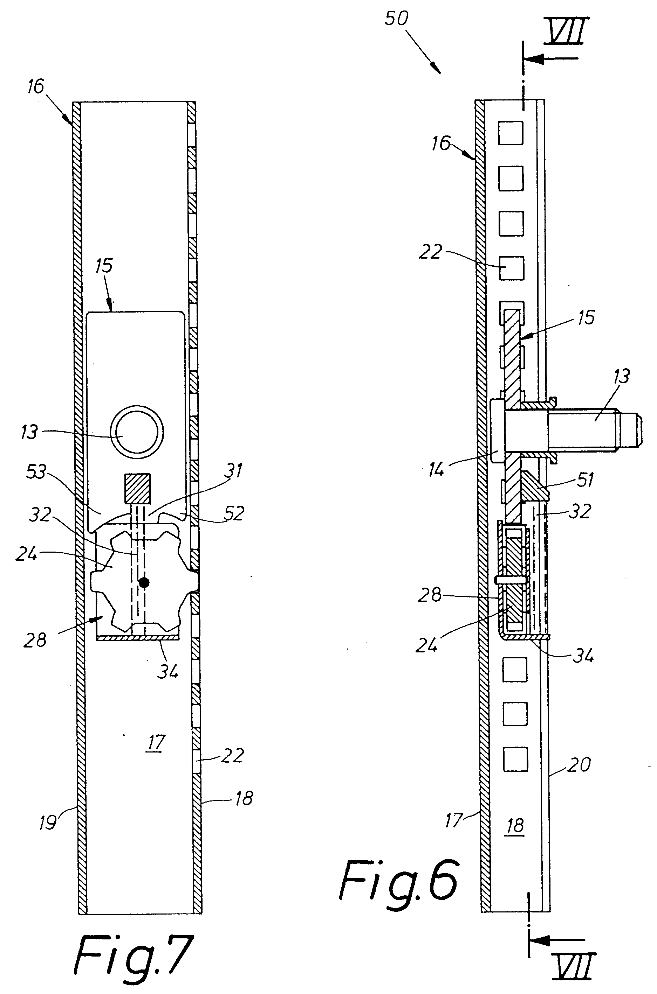

In den Figuren 6 und 7 ist ein weiteres Ausführungsbeispiel einer Verstellvorrichtung 50 dargestellt. Ein wesentlicher Unterschied zu der Verstellvorrichtung 10 besteht darin, daß die Löcher nicht in dem Steg 17, sondern in dem Profilschenkel 18 vorgesehen sind und daß das Zahnrad 24 um eine Achse senkrecht zum Steg 17 drehbar an dem Steuerteil 28 gelagert ist, dessen unterer Abschnitt 34 wiederum mittels einer Druckfeder 32 gegenüber dem plattenförmigen Führungselement 15 vorgespannt ist. Die Feder 32 greift dabei an einem Ansatz 51 an, der an dem plattenförmigen Führungselement 15 befestigt ist. Aus Vereinfachungsgründen wurden in Fig. 6 und 7 das an dem abgewinkelten Abschnitt 34 angreifende Drahtseil und die am oberen Ende des Steuerteils 28 angreifende Feder bzw. ein entsprechend umgelenktes Drahtseil weggelassen.

Eine weitere Besonderheit bei der Vorrichtung 50 besteht in der Gestaltung des plattenförmigen Führungselements 15, dessen Nase außermittig zu der Längsachse des Halteprofils 16 ebenso wie die Drehachse des Zahnrades 24 angeordnet ist. Wie aus der Fig. 7 zu entnehmen ist, sind beiderseits des trapezförmigen Rastelements 31 bogenförmige gekrümmte Profilabschnitte 52 und 53 vorgesehen, die in Eingriffsrichtung weisen. Die beiden Profilabschnitte 52 und 53 haben in etwa denselben Krümmungsmittelpunkt, der gleichseitig mit der Drehachse des Zahnrades 24 zusammenfällt. Der Profilabschnitt 53 greift dabei weiter um das Zahnrad 24 herum als der Profilabschnitt 52. Dies ist für eine zusätzliche stabilisierende Funktion von Bedeutung, wenn das Rastelement 31 bei Gurtzugbeanspruchung in Eingriff gelangt, weil dann der Eingriff des Zahnrades 24 in das entsprechende Loch 22 von dem Profilabschnitt 53 zusätzlich gewährleistet wird.

**Patentansprüche**

1. Vorrichtung zum Verstellen eines Gurtumlenkbeschlages (11) für einen Sicherheitsgurt (12), insbesondere des oberen Gurtumlenkbeschlages eines Dreipunkt-Automatikgurtes, bestehend aus
einem Halteprofil (16), an dem der Gurtumlenkbeschlag (11) mittels eines Führungselements (15) verschiebbar geführt und in verschiedenen Schubstellungen mittels eines Zahnrades (24) blockierbar ist,
welches stets mit einem unbeweglichen komplementären Eingriffsprofil (22) im Bereich des Halteprofils (16) kämmt und durch den Eingriff eines Rastelements (31, 41) blockierbar ist,
**dadurch gekennzeichnet,**
daß das Rastelement (31, 41) entgegen seiner Eingriffsrichtung in eine Nichteingriffsstellung mittels eines Steuerteils (28; 48, 49) über eine Feder (32) vorgespannt gehalten und bei Gurtbeanspruchung in eine Eingriffsstellung mit dem Zahnrad (24) bringbar ist.

2. Vorrichtung nach Anspruch 1, dadurch gekennzeichnet, daß das Steuerteil (28; 48, 49) fernbetätigt verschiebbar ist.

3. Vorrichtung nach Anspruch 1 oder 2, dadurch gekennzeichnet, daß das Rastelement (31) in der Richtung an das Zahnrad (24) angreift, in der sich der Gurtumlenkbeschlag (11) bei Gurtbeanspruchung zu bewegen trachtet.

4. Vorrichtung nach einem der vorangehenden Ansprüche, dadurch gekennzeichnet, daß das Halteprofil (16) zwei einander gegenüberliegende Führungsabschnitte (18, 19) aufweist, wobei das Eingriffsprofil (22) für das Zahnrad (24) in dem Halteprofil (16) gebildet ist.

5. Vorrichtung nach Anspruch 4, dadurch gekennzeichnet, daß das Halteprofil (16) annähernd U-förmig ausgebildet ist, wobei die Profilschenkel (18, 19) die Führungsabschnitte darstellen und das Eingriffsprofil mittels Durchbrechungen (22) im Steg (17) gestaltet ist.

**6.** Vorrichtung nach Anspruch 4, dadurch gekennzeichnet, daß das Halteprofil (16) annähernd U-förmig ausgebildet ist, wobei die Profilschenkel (18, 19) die Führungsabschnitte darstellen und das Eingriffsprofil (22) in einem der Profilschenkel (18, 19) gestaltet ist.

**7.** Vorrichtung nach einem der vorangehenden Ansprüche, dadurch gekennzeichnet, daß das Rastelement (31) an einem plattenförmigen Führungselement (15) angeformt ist, das im Halteprofil (16) in einer parallelen Ebene zum Steuerteil (28) geführt ist.

**8.** Vorrichtung nach Anspruch 1, dadurch gekennzeichnet, daß das Zahnrad (24) an dem Steuerteil (28) drehbar gelagert ist.

**9.** Vorrichtung nach Anspruch 1, dadurch gekennzeichnet, daß das Rastelement (41) an dem Zahnrad (24) in einem Bereich angreift, der dem Eingriffsbereich des Zahnrades (24) im Eingriffsprofil (22) diametral gegenüberliegt.

**10.** Vorrichtung nach Anspruch 9, dadurch gekennzeichnet, daß das Zahnrad (24) und das Rastelement (41) an dem Führungselement (15) drehbar gelagert sind, wobei das Rastelement (41) aus seiner Freigabestellung, in die es bei unbelastetem Gurtumlenkbeschlag (11) durch ein Steuerprofil (48, 49) des Steuerteils (28) gedrückt ist, bei Belastung des Gurtumlenkbeschlages (11) in Eingriff mit dem Zahnrad (24) drückbar ist.

**11.** Vorrichtung nach Anspruch 1, dadurch gekennzeichnet, daß das Zahnrad (24) außermittig zu der Längsachse des Halteprofils in Richtung auf das Eingriffsprofil (22) versetzt an dem Steuerteil (28) gelagert ist und daß das Rastelement (31) am Führungselement (15) ebenfalls entsprechend außermittig angeformt ist, wobei beiderseits des Rastelements in Eingriffsrichtung weisende gekrümmte Profilabschnitte (52, 53) angeformt sind, deren Krümmungsmittelpunkt mit der Drehachse des Zahnrades (24) zusammenfällt.

**12.** Vorrichtung nach einem der vorangehenden Ansprüche, dadurch gekennzeichnet, daß das Steuerteil (28) in einer Verschieberichtung mit einer Feder (38) vorgespannt ist.

**13.** Vorrichtung nach einem der vorangehenden Ansprüche, dadurch gekennzeichnet, daß an dem Steuerteil (28) eine Seilzuganordnung (36) zum Verschieben angreift.

**14.** Vorrichtung nach Anspruch 12, dadurch gekennzeichnet, daß die Seilzuganordnung zwei Seile aufweist, die in entgegengesetzte Verschieberichtungen orientiert sind.

**15.** Vorrichtung nach einem der Ansprüche 1 bis 8, dadurch gekennzeichnet, daß für das Verschieben des Steuerteils (28) ein an dem Zahn (24) angreifendes Band mit komplementären Eingriffslöchern vorgesehen ist.

**16.** Vorrichtung nach Anspruch 9 oder 10, dadurch gekennzeichnet, daß das Sperrelement (41) zum Verschieben des Gurtumlenkbeschlages (11) mit einem Handhebel schwenkbar ist.

**Claims**

**1.** A device for adjusting a belt deflection fitting (11) for a safety belt (12), in particular the upper belt deflection fitting of a three-point-automatic belt, comprising a holding profile (16), on which the belt deflection fitting (11) is displaceably guided by means of a guiding element (15) and can be blocked in various shift positions by means of a gear (24), which continuously meshes with an immovable complementary engagement profile (22) and which can be blocked by engagement of an arresting element (31, 41),
**characterized in that**
said arresting element (31, 41) is kept biased by a spring (32) against its engagement direction in a non-engagement position through a control member (28; 48, 49) and is engageable with said gear (24) on loading of the belt.

**2.** A device according to claim 1, characterized in that said control member (28; 48, 49) is displaceable with remote actuation (36).

**3.** A device according to claim 1 or 2, wherein the arresting element (31) engages the gear (24) in the direction in which the belt deflection fitting (11) tends to move under loading of the belt.

**4.** A device according to any one of the preceding claims, wherein the holding profile (16) comprises two oppositely disposed guide portions (18, 19), the engagement profile (22) for the gear (24) being formed in the holding profile (16).

**5.** A device according to claim 4, wherein the holding profile (16) is made substantially U-shaped, the profile legs (18, 19) being the guide portions and the engagement profile being formed by means of holes (22) in the web (17).

6. A device according to claim 4, wherein the holding profile (16) is made substantially U-shaped, the profile legs (18, 19) being the guide sections and the engagment profile (22) is formed in one profile leg (18, 19).

7. A device according to any one of the preceding claims, wherein the arresting element (31) is integrally formed on a plate-shaped guide element (15) which is guided in the holding profile (16) parallel to the control member (28).

8. A device according to claim 1, wherein the gear (24) is rotatably mounted on a control member (28).

9. A device according to claim 1 characterized in that said arresting element (41) engages said gear (24) in a region situated diametrically opposite the engagement region of the gear (24) in said engagement profile (22).

10. A device according to claim 9, characterized in that said gear (24) and said arresting element (41) are rotatably supported at said guiding means (15), said arresting element (41) being allgeable from its free position, wherein it is urged by a control profile (48, 49) of said control member (28) with unloaded belt deflection fitting, into engagement with said gear (24), if said fitting is loaded.

11. A device according to claim 1, characterized in that said gear (24) is supported at said control member (28) displaced from the longitudinal axis of said holding profile in the direction of said engagement profile (22) and that said arresting element (31) is formed at said guiding element (15) complementary thereto, on both sides of said arresting element being provided curved profile portions (52, 53), the center of couverture thereof coinciding with the rotational axis of said gear (24).

12. A device according to any one of the preceding claims, wherein the control member (28) is biased in a displacement direction with a spring (38).

13. A device according to any one of the preceding claims, wherein a cable means (36) engages the control member (28) for the displacement.

14. A device according to claim 12, wherein the cable means comprises two cables which are each orientated in one displacement direction.

15. A device according to any one of claims 1 to 8, wherein for displacing the control member (28) a band engaging the gear (24) and having complementary engagement holes is provided.

16. A device according to claim 9 or 10, wherein the blocking element (41) for displacing the belt deflection fitting (11) is pivotal with a hand lever.

**Revendications**

1. Dispositif de réglage de la position d'une ferrure pivotante ( 11) Pour ceinture de sécurité (12), en particulier de la ferrure pivotante supérieure d'une ceinture automatique à trois points, dispositif comprenant un profilé de support (16) sur lequel la ferrure pivotante (11) est guidée en translation au moyen d'un élément de guidage (15) et est agencée de manière à pouvoir être immobilisée en différentes positions de butée au moyen d'une roue dentée (24),

   laquelle roue dentée coopère de façon permanente avec un profil de prise complémentaire (22), fixe et situé au voisinage du profilé de support (16), et est conçue pour pouvoir être immobilisée en position par l'engagement d'un élément d'encliquetage (31, 41),

   caractérisé en ce que l'élément d'encliquetage (31, 41) est normalement maintenu dans une position de libération au moyen d'un organe de commande (28 ; 48, 49), sous l'action, en sens opposé au sens d'engagement dudit élément d'encliquetage, d'un ressort (32) et est conçu pour pouvoir être amené en position d'engagement avec la roue dentée (24) lorsqu'une force est appliquée sur la ceinture.

2. Dispositif selon la revendication 1, caractérisé en ce que l'organe de commande (28 ; 48, 49) est agencé de manière que son déplacement puisse être commandé à distance.

3. Dispositif selon la revendication 1 ou 2, caractérisé en ce que l'élément d'encliquetage (31) vient en prise avec la roue dentée (24) par déplacement dans le sens où la ferrure pivotante (11) de la ceinture a tendance à se déplacer lorsqu'une force est appliquée sur la ceinture.

4. Dispositif selon l'une des revendications précédentes, caractérisé en ce que le profilé de support (16) comprend deux parties de guidage (18, 19) opposées l'une à l'autre, le profil de prise (22) destiné à la roue dentée (24) étant formé dans le profilé de support (16).

5. Dispositif selon la revendication 4, caractérisé en ce que le profilé de support (16) a sensiblement la forme d'un U et en ce que les ailes (18, 19) du profilé présentent les parties de guidage et le profil de prise est formé au moyen d'ouvertures (22) pratiquées dans l'âme (17) du profilé.

6. Dispositif selon la revendication 4, caractérisé en ce que le profilé de support (16) a sensiblement la forme d'un U et en ce que les ailes (18, 19) du profilé présentent les parties de guidage et le profil de prise (22) est formé dans l'une des ailes (18, 19) du profilé.

7. Dispositif selon l'une des revendications précédentes, caractérisé en ce que l'élément d'encliquetage (31) est formé d'un seul tenant avec un élément de guidage (15) en forme de plaque, qui est guidé dans le profilé de support (16) dans un plan parallèle à l'organe de commande (28).

8. Dispositif selon la revendication 1, caractérisé en ce que la roue dentée (24) est tourillonnée sur l'organe de commande (28).

9. Dispositif selon la revendication 1, caractérisé en ce que l'élément d'encliquetage (41) vient en prise avec la roue dentée (24) dans une zone diamétralement opposée à la zone de prise de la roue dentée (24) avec le profil de prise (22).

10. Dispositif selon la revendication 9, caractérisé en ce que la roue dentée (24) et l'élément d'encliquetage (41) sont tourillonnés sur l'élément de guidage (15), l'élément d'encliquetage (41) étant agencé de manière à pouvoir être déplacé, lorsqu'une force est appliquée sur la ferrure pivotante (11) de la ceinture, dans le sens de son engagement avec la roue dentée (24), à partir de sa position de libération dans laquelle il est repoussé par un profil de commande (48, 49) de l'organe de commande (28) en l'absence de force appliquée sur la ferrure pivotante (11) de la ceinture.

11. Dispositif selon la revendication 1, caractérisé en ce que la roue dentée (24) est supportée par l'organe de commande (28) en un emplacement excentré par rapport à l'axe longitudinal du profilé de support, en direction du profil de prise (22), en ce que l'élément d'encliquetage (31) est formé sur l'élément de guidage (15) en un emplacement pareillement excentré, et en ce que des parties de profilé (52, 53) recourbées dans le sens de l'engagement, dont le centre de courbure coïncide avec l'axe de rotation de la roue dentée (24), sont formées de chaque côté de l'élément d'encliquetage.

12. Dispositif selon l'une des revendications précédentes, caractérisé en ce que l'organe de commande (28) est normalement sollicité dans un sens de déplacement par un ressort (38).

13. Dispositif selon l'une des revendications précédentes, caractérisé en ce qu'un moyen de traction (36) à câble est relié à l'organe de commande (28) pour en assurer le déplacement.

14. Dispositif selon la revendication 12, caractérisé en ce que le moyen de traction comporte deux câbles orientés dans des sens de déplacement opposés.

15. Dispositif selon l'une des revendications 1 à 8, caractérisé en ce que, pour déplacer l'organe de commande (28), il est prévu une bande qui est en prise avec la roue dentée (24) par des orifices d'engagement complémentaires.

16. Dispositif selon la revendication 9 ou 10, caractérisé en ce que l'élément d'encliquetage (41) est agencé de manière à pouvoir être basculé au moyen d'un levier pour permettre le déplacement de la ferrure pivotante (11) de la ceinture.

Fig.3

Fig.2

Fig.1

Fig. 5

Fig. 4

EP 0 320 739 B1

Fig.7

Fig.6

10